# EUROPÄISCHE PATENTSCHRIFT

(11) **EP 1 940 723 B1**
(45) Veröffentlichungstag und Bekanntmachung des Hinweises auf die Patenterteilung: **22.07.2009**
(21) Anmeldenummer: 06792169.2
(22) Anmeldetag: 20.09.2006
(51) Int. Cl.: B66F 9/075, B62D 5/04, B60K 7/00, B60K 17/30, B62D 7/02

(54) **ANTRIEBSEINHEIT**
DRIVE UNIT
UNITE DE COMMANDE

(30) Priorität: 29.09.2005 DE 102005046614
(43) Veröffentlichungstag der Anmeldung: 09.07.2008
(73) Patentinhaber: ZF Friedrichshafen AG, 88038 Friedrichshafen (DE)
(72) Erfinder: SCHARFENBERG, Stephan, 99869 Tüttleben (DE); HABEL, Matthias, 99867 Gotha (DE); HEINRICH, Kai, 88285 Bodnegg (DE); BALD, Dirk, 99867 Gotha (DE); HERING, Torsten, 88662 Überlingen (DE)
(74) Vertreter: Gebhard, Wolfgang
(86) Internationale Anmeldenummer: PCT/EP2006/009128
(87) Internationale Veröffentlichungsnummer: WO 2007/036316

(56) Entgegenhaltungen:
- EP-A1- 0 490 673
- DE-A1- 10 148 490
- DE-A1-2102004 006 72

## Beschreibung

Die Erfindung betrifft eine Antriebseinheit nach der im Oberbegriff von Anspruch 1 näher definierten Art, welcher durch die DE-A-2004 006722 offenbart wird.

Gattungsgemäße Antriebseinheiten werden insbesondere für elektrisch angetriebene Flurförderzeuge verwendet, um ein Antriebsrad im Sinne einer Antriebsbewegung und einer Lenkbewegung anzutreiben. Hierbei werden elektronische Steuereinheiten benötigt, um die Elektromotoren anzusteuern, welche in der Regel an Rahmenbauteilen des Fahrzeugs befestigt und über elektrische Leitungen mit den Elektromotoren verbunden sind.

Die DE-A-100 12 162 offenbart ein Flurförderzeug, bei welchem die elektronische Steuereinheit unmittelbar benachbart zum Batteriesystem im Fahrzeugrahmen befestigt ist.

Die DE-A-101 48 490 offenbart ein Motorgehäuse für ein Flurförderzeug, bei welchem am Motorgehäuse ein Befestigungsteil für eine Leistungselektronik-Einheit angeordnet ist, und die Leistungselektronik-Einheit, welche den Antriebsmotor über Kabel mit elektrischer Energie versorgt, somit direkt im Bereich des Antriebsmotors befestigt ist. Die Leistungselektronik-Einheit ist hierbei koaxial und oberhalb des Antriebsmotors angeordnet, wodurch der Antrieb in axialer Länge erheblichen Bauraum benötigt. Die Lenkbewegung wird manuell über eine Deichsel auf den Fahrmotor übertragen.

Der vorliegenden Erfindung liegt die Aufgabe zugrunde, eine Antriebseinheit mit einem Fahrmotor einer elektronischen Steuereinheit und einem elektrischen Lenkmotor zu schaffen, welcher kompakt aufgebaut und in axialer Länge innerhalb des zur Verfügung stehenden Bauraums in einem Flurföderzeug unterbringbar ist.

Die Aufgabe wird mit einer, auch die kennzeichnenden Merkmale des Hauptanspruchs aufweisenden, gattungsgemäßen Antriebseinheit gelöst.

Erfindungsgemäß weist die Antriebseinheit einen Fahrmotor und einen Lenkmotor auf, welche koaxial angeordnet sind, und bei welcher die elektronische Steuereinheit für den Fahrmotor so angeordnet ist, dass der Fahrmotor zwischen dem Lenkmotor und der elektronischen Steuereinheit für den Fahrmotor angeordnet ist.

In einer weiteren Ausgestaltungsform der Erfindung weist der Fahrmotor einen möglichst großen Durchmesser und möglichst geringe Baulänge auf, und der Lenkmotor weist einen möglichst kleinen Durchmesser und eine möglichst große Baulänge auf, wodurch der Lenkmotor, zumindest teilweise, innerhalb des Fahrmotors angeordnet werden kann. Durch den Durchmesserunterschied des Lenkmotors zum Fahrmotor ergibt sich ein Bauraum, in welchem die elektronische Steuereinheit des Lenkmotors angeordnet sein kann.

In einer weiteren Ausgestaltungsform der Erfindung ist im Bereich des Lenkmotors die Signal- und Steuerungselektronik angeordnet, da die Erwärmung im Bereich des Lenkmotors geringer ist, und somit die Signal- und Steuerungselektronik einem geringeren Temperaturniveau ausgesetzt ist.

Es besteht die Möglichkeit, das Gehäuse so auszubilden, dass die elektronischen Steuereinheiten an das Gehäuse abgebaut werden können, oder das Gehäuse so auszubilden, dass die elektronischen Steuereinheiten in das Gehäuse integriert werden können, oder dass die elektronischen Steuereinheiten einen Teil des Gehäuses bilden.
Durch die spezielle Ausbildung und Anordnung der Motoren sowie der Steuerungselektroniken besteht die Möglichkeit, den Lenkmotor und den Fahrmotor koaxial anzuordnen und dennoch die axiale Baulänge der Antriebseinheit nicht zu überschreiten.

Weitere Merkmale sind der Figuren-Beschreibung zu entnehmen. Es zeigen:

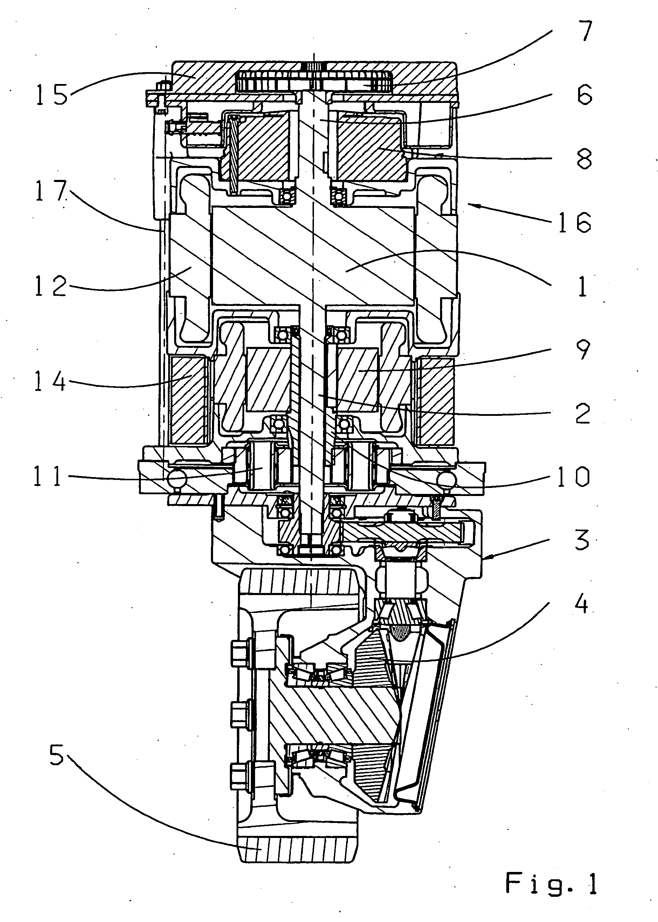

- Fig. 1: einen Schnitt durch die Antriebseinheit und

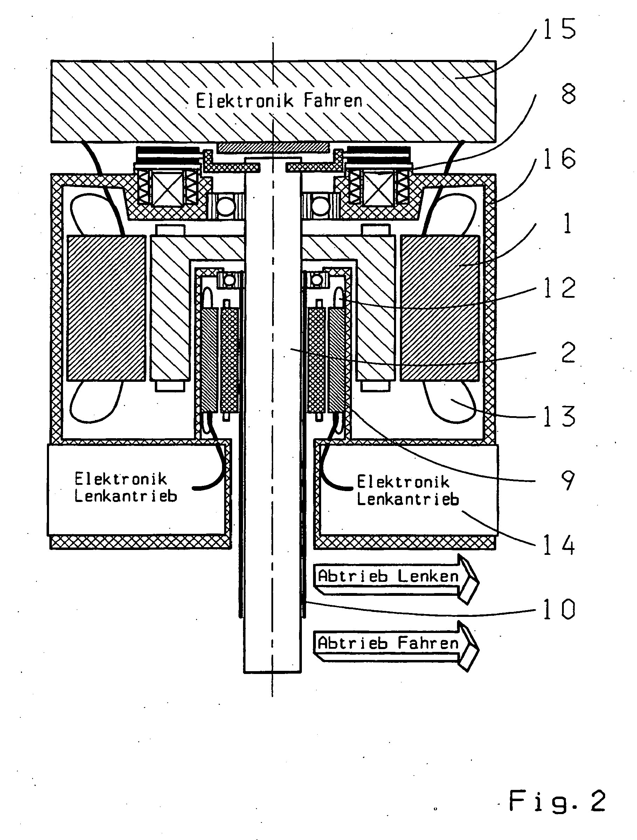

- Fig. 2: ein Teil-Schema der Antriebseinheit.

### Fig. 1:

Ein Fahrtriebsmotor 1 treibt über seine Antriebswelle 2 ein Stirnradgetriebe 3, ein Kegelradgetriebe 4, ein Antriebsrad 5 im Sinne einer Fahrbewegung an. Über die Antriebswelle 6 treibt der Fahrmotor 1 ein Lüfterrad 7 an und steht mit einem Drehzahlsensor in Verbindung. Die Antriebswelle 6 durchdringt eine Bremse 8, wodurch der Antriebsmotor 1 bremsbar ist. Ein Lenkmotor 9 treibt über seine Antriebswelle 10 ein Wolfrom-Getriebe 11 an, welches auch als Planetengetriebe ausgeführt sein kann, um das Antriebsrad 5 im Sinne einer Lenkbewegung anzutreiben. Die Wicklungsköpfe 12 sind radial innerhalb der Wicklungsköpfe 13 angeordnet. Somit ist der Lenkmotor 9, zumindest teilweise, innerhalb des Fahrmotors 1 angeordnet. Durch den Durchmesserunterschied des Lenkmotors 9 zum Fahrmotor 1 ist im Bereich des Lenkmotors 9 eine elektronische Steuereinheit des Lenkmotors 14 angeordnet. Es besteht die Möglichkeit, dass die elektronische Steuereinheit 14 noch zusätzlich die Signal- und Steuerungselektronik des Fahrmotors 1 mit beinhaltet, da die Wärmeentwicklung im Bereich des Lenkmotors 9 geringer ist. Der Fahrmotor 1 ist zwischen dem Lenkmotor 9 und der elektronischen Steuereinheit des Fahrmotors 15 angeordnet. Die Bremse 8 ist zwischen der elektronischen Steuereinheit 15 und dem Fahrmotor 1 angeordnet. Das Gehäuse 16 kann aus einzelnen Bauabschnitten bestehen, welche durch Verbindungselemente 17 verbunden sind.

### Fig. 2:

Der Lenkmotor 9 ist, zumindest teilweise, innerhalb des Fahrmotors 1 angeordnet. Die elektronische Steuereinheit des Lenkmotors 15 ist im Bereich des Lenkmotor zwischen dem Durchmesser des Lenkmotors 9 und dem Durchmesser des Fahrmotors 1 angeordnet. Die elektronische Steuereinheit 15 des Fahrmotors ist benachbart zum Fahrmotor 1 angeordnet, wobei der Fahrmotor 1 zwischen der elektronischen Steuereinheit 15 und der elektronischen Steuereinheit 14 angeordnet ist.

### Bezugszeichen

- 1: Fahrmotor
- 2: Antriebswelle
- 3: Stirnradgetriebe
- 4: Kegelradgetriebe
- 5: Antriebsrad
- 6: Antriebswelle
- 7: Lüfterrad
- 8: Bremse
- 9: Lenkmotor
- 10: Antriebswelle
- 11: Wolfrom-Getriebe
- 12: Wicklungsköpfe
- 13: Wicklungsköpfe
- 14: elektronische Steuereinheit
- 15: elektronische Steuereinheit
- 16: Gehäuse
- 17: Verbindungselemente

## Patentansprüche

1. Antriebseinheit mit einem Fahrmotor (1) und einem Lenkmotor (9), wobei der Fahrmotor (1) ein Fahrzeugrad (5) im Sinne eines Fahrantriebs und der Lenkmotor (9) das Fahrzeugrad (5) im Sinne einer Lenkbewegung antreibt, wobei der Fahrmotor (1) und der Lenkmotor (9) koaxial angeordnet sind, **dadurch gekennnzeichnet**, dass eine elektronische Steuereinheit (15) für den Fahrmotor (1), welche aus einer Leistungselektronik besteht, mit einer Signal- und Steuerungselektronik in Verbindung steht, an- oder in der Antriebseinheit angeordnet ist, wobei der Fahrmotor (1) zwischen dem Lenkmotor (9) und der elektronischen Steuereinheit (15) für den Fahrmotor (15) angeordnet ist und eine elektronische Steuereinheit (14) für den Lenkmotor (9) zwischen dem Fahrmotor (1) und dem Fahrzeugrad (5) angeordnet ist.

2. Antriebseinheit nach Anspruch 1, **dadurch gekennzeichnet, dass** die elektronische Steuereinheit für den Lenkmotor (14) im Bereich des Lenkmotors (9) angeordnet ist

3. Antriebseinheit nach Anspruch 1, **dadurch gekennzeichnet, dass** die Signal- und Steuerungselektronik der elektronischen Steuereinheit (15) des Fahrmotors (1) im Bereich des Lenkmotors (9) angeordnet ist.

4. Antriebseinheit nach Anspruch 1, **dadurch gekennzeichnet, dass** ein Sensor zur Erfassung der Drehzahl des Fahrmotors (1) im Bereich der elektronischen Steuereinheit des Fahrmotors (15) angeordnet ist.

5. Antriebseinheit nach Anspruch 1, **dadurch gekennzeichnet, dass** der Lenkmotor (9), zumindest teilweise, innerhalb des Fahrmotors (1) angeordnet ist und eine Antriebskette (2) des Fahrmotors (1) eine Antriebswelle (10) des Lenkmotors (9) durchdringt.

6. Antriebseinheit nach Anspruch 1, **dadurch gekennzeichnet, dass** der Fahrmotor (1) als Motor mit geringer axialer Baulänge und der Lenkmotor (9) als Motor mit geringer radialer Baulänge ausgeführt sind.

7. Antriebseinheit nach Anspruch 1, **dadurch gekennzeichnet, dass** eine mit dem Fahrmotor (1) in Verbindung stehende Bremse (8) zwischen der elektronischen Steuereinheit des Fahrmotors (15) und dem Fahrmotor (1) angeordnet ist.

8. Antriebseinheit nach Anspruch 1, **dadurch gekennzeichnet, dass** innerhalb der elektronischen Steuereinheit des Fahrmotors (15) ein Lüfter rad (7) angeordnet ist.

9. Antriebseinheit nach Anspruch 1, **dadurch gekennzeichnet, dass** Wickelköpfe (12) des Lenkmotors (9) radial innerhalb von Wickelköpfen (13) des Fahrmotors (1) angeordnet sind.

10. Antriebseinheit nach Anspruch 1, **dadurch gekennzeichnet, dass** die elektronische Steuereinheit für den Lenkmotor (14) in einer gemeinsamen Steuereinheit mit der elektronischen Steuereinheit des Fahrmotors (15) zusammengefasst ist.

## Claims

1. Drive unit having a traction motor (1) and a steering motor (9), with the traction motor (1) driving a vehicle wheel (5) for the purpose of traction driving and the steering motor (9) driving the vehicle wheel (5) for the purpose of a steering movement, with the traction motor (1) and the steering motor (9) being arranged coaxially, **characterized in that** an electronic control unit (15) for the traction motor (1), which electronic control unit comprises power electronics, is connected to signal and control electronics arranged on or in the drive unit, with the traction motor (1) being arranged between the steering motor (9) and the electronic control unit (15) for the traction motor (15), and an electronic control unit (14) for the steering motor (9) being arranged between the traction motor (1) and the vehicle wheel (5).

2. Drive unit according to Claim 1, **characterized in that** the electronic control unit for the steering motor (14) is arranged in the region of the steering motor (9).

3. Drive unit according to Claim 1, **characterized in that** the signal and control electronics of the electronic control unit (15) of the traction motor (1) are arranged in the region of the steering motor (9).

4. Drive unit according to Claim 1, **characterized in that** a sensor for detecting the rotation speed of the traction motor (1) is arranged in the region of the electronic control unit of the traction motor (15).

5. Drive unit according to Claim 1, **characterized in that** the steering motor (9) is arranged, at least partially, within the traction motor (1) and a drive shaft (2) of the traction motor (1) passes through a drive shaft (10) of the steering motor (9).

6. Drive unit according to Claim 1, **characterized in that** the traction motor (1) is designed as a motor with a low overall axial length and the steering motor (9) is designed as a motor with a low overall radial length.

7. Drive unit according to Claim 1, **characterized in that** a brake (8) which is connected to the traction motor (1) is arranged between the electronic control unit of the traction motor (15) and the traction motor (1).

8. Drive unit according to Claim 1, **characterized in that** a fan impeller (7) is arranged within the electronic control unit of the traction motor (15).

9. Drive unit according to Claim 1, **characterized in that** winding heads (12) of the steering motor (9) are arranged radially within winding heads (13) of the traction motor (1).

10. Drive unit according to Claim 1, **characterized in that** the electronic control unit for the steering motor (14) is combined to form a common control unit with the electronic control unit of the traction motor (15).

## Revendications

1. Unité de commande avec un moteur de traction (1) et un moteur de direction (9), dans lequel le moteur de traction (1) entraîne une roue de véhicule (5) au sens d'une commande de traction et le moteur de direction (9) entraîne la roue de véhicule (5) au sens d'un mouvement de direction, dans lequel le moteur de traction (1) et le moteur de direction (9) sont disposés de manière coaxiale, **caractérisée en ce qu'**une unité de commande électronique (15) pour le moteur de traction (1), qui se compose d'une électronique de puissance et est en liaison avec une électronique de signalisation et de commande, est disposée sur ou dans l'unité de commande, dans laquelle le moteur de traction (1) est disposé entre le moteur de direction (9) et l'unité de commande électronique (15) pour le moteur de traction (1), et une unité de commande électronique (14) pour le moteur de direction (9) est disposée entre le moteur de traction (1) et la roue de véhicule (5).

2. Unité de commande selon la revendication 1, **caractérisée en ce que** l'unité de commande électronique (14) pour le moteur de direction est disposée dans la région du moteur de direction (9).

3. Unité de commande selon la revendication 1, **caractérisée en ce que** l'électronique de signalisation et de commande de l'unité de commande électronique (15) du moteur de traction (1) est disposée dans la région du moteur de direction (9).

4. Unité de commande selon la revendication 1, **caractérisée en ce qu'**un détecteur destiné à détecter la vitesse de rotation du moteur de traction (1) est disposé dans la région de l'unité de commande électronique (15) du moteur de traction.

5. Unité de commande selon la revendication 1, **caractérisée en ce que** le moteur de direction (9) est disposé, au moins en partie, à l'intérieur du moteur de traction (1), et un arbre de commande (2) du moteur de traction (1) passe à travers un arbre de commande (10) du moteur de direction (9).

6. Unité de commande selon la revendication 1, **caractérisée en ce que** le moteur de traction (1) est réalisé sous la forme d'un moteur à faible longueur axiale et le moteur de direction (9) est réalisé sous la forme d'un moteur à faible longueur radiale.

7. Unité de commande selon la revendication 1, **caractérisée en ce qu'**un frein (8) en liaison avec le moteur de traction (1) est disposé entre l'unité de commande électronique (15) du moteur de traction et le moteur de traction (1).

8. Unité de commande selon la revendication 1, **caractérisée en ce qu'**une roue de ventilateur (7) est disposée à l'intérieur de l'unité de commande électronique (15) du moteur de traction.

9. Unité de commande selon la revendication 1, **caractérisée en ce que** des têtes de bobine (12) du moteur de direction (9) sont disposées radialement à l'intérieur de têtes de bobine (13) du moteur de traction (1).

10. Unité de commande selon la revendication 1, **caractérisée en ce que** l'unité de commande électronique (14) pour le moteur de direction est réunie en une unité de commande commune avec l'unité de commande électronique (15) du moteur de traction.
